# EUROPEAN PATENT APPLICATION

(11) **EP 1 637 706 A1**
(43) Date of publication of application: **22.03.2006**
(21) Application number: 04255613.4
(22) Date of filing: 16.09.2004
(51) Int. Cl.: F01N 3/38, F01N 3/20, F01N 3/025, F02B 37/20

(54) **System and method for increasing the temperature of gases within an exhaust of an internal combustion engine**

(71) Applicant: Delphi Technologies, Inc., Troy, MI 48007 (US)
(72) Inventor: Bruckmann, Thomas, 54332 Wasserfliesch (DE)
(74) Representative: Jones, Keith William

(57) **Abstract**

Reformate gas is supplied into the exhaust 4 of an internal combustion engine 2 at a location upstream of an oxidation catalyst 6 and an ignition source 14 is provided either upstream or downstream of the oxidation catalyst and upstream of further exhaust gas treatment devices 8 for igniting the mixture in the exhaust to provide rapid heat up of the oxidation catalyst 6 and further exhaust gas treatment devices 8. In a further embodiment reformate gas is injected into the exhaust 24 upstream of a turbocharger 26 to increase turbocharger boost pressure at low engine speeds.

## Description

The present invention relates to a system and method for increasing the temperature of gases within an exhaust of an internal combustion engine, in particular in a diesel or lean-burn gasoline engine.

Shortly after starting an internal combustion engine exhaust gas temperatures are low, especially at idle or low engine speeds. Accordingly it can take a considerable time period for components provided within the exhaust, such as exhaust gas treatment devices and turbochargers, to reach a temperature required for correct operation. This is a particular problem in diesel engines since exhaust gas temperatures in diesel engines are generally relatively low compared to those of equivalent petrol or gasoline engines. As such, it can take a considerable period of time after a cold engine start for exhaust gas treatment components, such as oxidation catalysts, particulate filters and NOx traps, to reach the required operating temperature necessary for satisfactory operation. Particulate filters in particular have to be regenerated from time to time. This requires a sufficiently high temperature to burn off the soot trapped in the filter otherwise the filter may become blocked and will subsequently break down resulting in high soot emissions from the exhaust.

Systems are known for providing additional combustion components and additional air into an exhaust which are ignited in the exhaust in order to increase the exhaust gas temperature and promote rapid heating of exhaust gas treatment components and other components provided within the exhaust system.

Examples of such known systems are disclosed in GB2280128, EP0422432, DE19942711 and DE4142315. In each of the known systems, additional fuel is fed into the exhaust via the engine and additional air is injected into the exhaust downstream of the engine. In some cases an ignition system, in the form of a spark plug or glow plug, is provided within the exhaust for igniting the fuel/air mixture contained therein.

Such known systems are unsatisfactory since the fuel supplied is that used by the internal combustion engine and the excess fuel has to pass through the combustion chamber before being ignited in the exhaust. Accordingly such systems can adversely affect the engine operating conditions and cannot operate independently of the internal combustion engine. Furthermore, the burning of fuel and air within the exhaust can cause further emission problems unless accurate control of the air fuel ratio within the exhaust system is maintained.

An object of the present invention is to provide a method and system for increasing the temperature of the exhaust gases within the exhaust which operates independently of the engine operating conditions and avoids the risk of increased emissions of pollutants from the exhaust. Another object of the present invention is to achieve rapid heating of the exhaust components during initial engine start up without damaging heat sensitive components, such as oxidation catalysts.

According to the present invention there is provided a method of increasing the temperature of exhaust gases within the exhaust of an internal combustion engine comprising supplying a combustible gas into the exhaust at a location downstream of a combustion chamber of the internal combustion engine.

Preferably the method comprises the further steps of providing an ignition source within the exhaust for igniting said combustible gas and operating said ignition source to ignite said combustible gas in said exhaust.

According to a further aspect of the invention there is provided a system for increasing the temperature of exhaust gas within an exhaust of an internal combustion engine, said system comprising a source of combustible gas and means for injecting said combustible gas into the exhaust at a location downstream of a combustion chamber of the internal combustion engine.

Preferably the system further comprises an ignition source for igniting the combustible gas within the exhaust.

In a preferred embodiment the combustible gas comprises reformate gas. Reformate gas comprises gaseous fuel having a high hydrogen content and can be produced by reforming gasoline at high temperature (600°C to 900°C) in the presence of a catalyst. Typically reformate gas has a composition of 21% H₂, 23% CO, 0.5% CO₂, 1.5% CH₄ and 54%N₂.

In a preferred embodiment said combustible gas is supplied into the exhaust at a location upstream of a first exhaust gas treatment device provided in the exhaust whilst said ignition source is provided at a location either upstream or downstream of said first exhaust gas treatment device. Preferably said first exhaust gas treatment device comprises an oxidation catalyst.

Preferably further exhaust gas treatment devices, such as a particulate filter and a NOx trap, are provided in the exhaust downstream of said ignition source such that the combustion of the combustible gas within the exhaust provides rapid heating of said further exhaust gas treatment devices such that said devices rapidly reach a required operating temperature.

In an alternative embodiment, a turbocharger is provided in the exhaust and the combustible gas is supplied into the exhaust at a location upstream of the turbocharger. Combustion of the combustible gas upstream of the turbocharger increases the temperature and volume of the exhaust gases and provides additional energy to the turbocharger providing increased boost pressure and thus increasing the air mass within the combustion chamber of the internal combustion engine improving engine torque at low engine speeds, particularly at low load and/or low engine speed.

An ignition source, such as a spark plug, may be provided in the exhaust upstream of the turbocharger, if required to ignite the combustible gas.

Preferred features and advantages of the invention will be apparent from the claims and from the following description.

An embodiment of the invention will now be described, by way of example only, with reference to the drawings, in which:
Figure 1 is a schematic view of an internal combustion engine having a system for increasing the temperature of gases within an exhaust system according to a first embodiment of the present invention; and
Figure 2 is a schematic view of a turbocharged internal combustion engine having a system for increasing the temperature of gases within an exhaust system according to a second embodiment of the present invention.

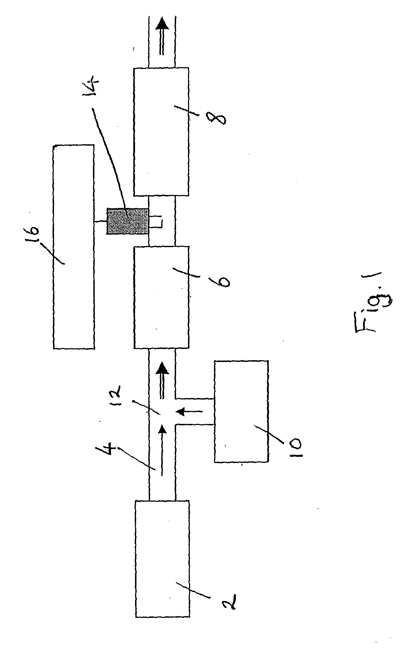

As shown in Figure 1, an internal combustion engine 2 has an exhaust system 4 into which exhaust gases from the combustion chamber of the engine are passed. Within the exhaust system is a first exhaust gas treatment device 6, in the form of an oxidation catalyst, commonly known as a catalytic converter, and secondary exhaust gases treatment devices 8, such as a particulate filter and a NOx trap.

A source of combustible gas 10, in the form of hydrogen rich reformate gas having a typical composition of 21% H₂, 23% CO, 0.5% CO₂, 1.5% CH₄ and 54%N₂, is connected to the exhaust and means are provided for injecting the combustible gas into the exhaust 4 at a location 12 downstream of the internal combustion engine 2 and upstream of the oxidation catalyst 6. Unlike prior art systems, additional air is not supplied into the exhaust. The system is primarily intended for use with lean burn engines where extra oxygen will normally be available within the exhaust gases.

The source of reformate gas can comprise an onboard reformer capable of reforming hydrocarbon fuel, such as gasoline or diesel, into reformate having a high hydrogen content. Such onboard reformers are known and thus will not be described in more detail. Alternatively, or additionally, the source of reformate gas may comprise a pressurised container containing a supply of reformate gas, possibly in addition to an onboard reformer for use during warm up of the onboard reformer.

Because the exhaust gas temperature may be insufficient for auto-ignition of the reformate gas and oxygen mixture, an ignition source, in the form of a spark plug 14, is provided in the exhaust 4. The spark plug 14 can be located either upstream or downstream of the oxidation catalyst 6 and upstream of the secondary exhaust gas treatment devices 8. If the spark plug 14 is located downstream of the oxidation catalyst the reformate gas and oxygen mixture is ignited downstream of the oxidation catalyst 6, thus avoiding overheating of the oxidation catalyst 6 which would occur when igniting the mixture upstream of the oxidation catalyst 6. This also enables a high initial rate of reformate gas to be used to rapidly heat the exhaust gas treatment components without the risk of damaging the oxidation catalyst. However, it may be more desirable to locate the spark plug 14 upstream of the oxidation catalyst 6 to provide rapid heating of the oxidation catalyst 6 following engine start up.

A control device 16 is connected to the spark plug 14 to activate the spark plug 14 and ignite the reformate gas, when required. The control device 16 is preferably linked to the control of the supply of reformate gas to the exhaust and, in the preferred embodiment, operates as follows.

At engine start up reformate gas is supplied into the exhaust 2. If the exhaust gas temperature is below the light-off temperature of the exhaust components 6, 8, the spark plug 14 is activated to ignite the mixture. Once the light-off temperature of the exhaust components 6,8 has been reached the spark plug 14 might be deactivated.

The reformate gas injection will follow a programmed sequence. Initially the reformate gas will be supplied at a high rate to achieve a fast system heat up. Once the target temperature for the exhaust components 6, 8 has been reached the reformate gas supply rate is reduced to a lower rate sufficient to compensate for heat losses in the exhaust. As described above, by initially igniting the reformate gas downstream of the oxidation catalyst 6, a high initial supply rate of reformate gas can be used to increase the speed of system heat up without risking damage to the oxidation catalyst 6.

Whilst an ignition source in the form of a spark plug 14 is specifically disclosed it is envisaged that a glow plug might be used as an alternative, simplifying the ignition source control device 16.

By supplying the reformate gas to the exhaust 4 upstream of the oxidation catalyst 6, the CO and HC components of the reformate gas can be oxidised by the oxidation catalyst 6 to provide acceptable emission levels even where a high rate of reformate gas is supplied for prolonged periods.

The embodiment of the present invention shown in Figure 1 and described above is particularly suitable for diesel engines, wherein the exhaust gas temperature is relatively low compared to that of a gasoline engine and thus the time taken for exhaust gas treatment devices, in particular oxidation catalysts, to reach their required operating temperature can be excessive, leading to emission problems in the period following a cold start of the engine. Furthermore, diesel engines are normally fitted with particulate filters to prevent the emission of soot from the exhaust. If the exhaust gas temperature is insufficient to enable regeneration of the particulate filter to take place, the particulate filter can become clogged leading to break down of the filter and high soot emissions from the exhaust. The present invention avoids such problems by ensuring the particulate filter rapidly reaches the temperature required for regeneration and ensuring such temperature is maintained during operation of the engine.

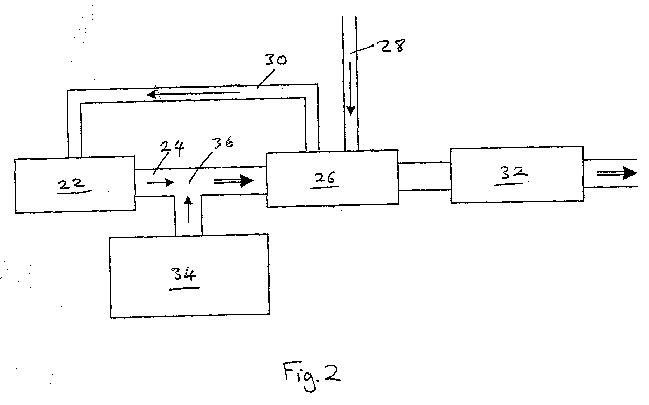

Figure 2 shows a second embodiment of the present invention.
An internal combustion engine 22, which may be either gasoline or diesel fuelled, has an exhaust 24 in which is situated a turbocharger 26 whereby the energy of the exhaust gases from the engine 22 is used to drive a turbine operatively linked to a compressor supplied with air from an air inlet duct 28 and supplying compressed air to air outlet duct 30 connected to the intake manifold of the internal combustion engine 22 increasing the pressure of the air supplied to the intake of the internal combustion engine. One or more exhaust gas treatment devices 32 are provided downstream of the turbocharger 22.

Turbochargers can provide increased torque by increasing the charge density within the combustion chamber of the internal combustion engine. However, at low load and/or low speed engine conditions there may be insufficient energy in the exhaust gases to drive the turbocharger resulting in low boost pressure and low engine torque under such conditions.

In order to overcome this problem a source of combustible gas 34, preferably in the form of hydrogen rich reformate gas having a typical composition of 21% H₂, 23% CO, 0.5% CO₂, 1.5% CH₄ and 54%N₂, is connected to the exhaust and means are provided for injecting the combustible gas into the exhaust 24 at a location 36 downstream of the internal combustion engine 22 and upstream of the turbocharger 26.

By introducing a combustible gas into the exhaust 24 at a location 36 upstream of the turbocharger 26 combustion occurs within the exhaust, increasing the temperature and volume of the exhaust gas, increasing the speed of the turbine of the turbocharger and providing additional boost pressure, thus increasing engine torque, particularly at low engine speed.

As with the first embodiment, the combustion of reformate gas within the exhaust also rapidly heats the exhaust gas treatment components 32 within the exhaust to the required operating temperature necessary for satisfactory operation and maintains said exhaust gas treatment components, such as an oxidation catalyst, at the required operating temperature.

If required, an ignition source, such as a spark plug or glow plug, may be provided within the exhaust for igniting the mixture of reformate gas and oxygen contained therein.

Whilst in the preferred embodiment the combustible gas comprises reformate gas, it is envisaged that other combustible gases or other combustible products may be used.

## Claims

1. A method of increasing the temperature of exhaust gases within the exhaust of an internal combustion engine comprising supplying a combustible gas into the exhaust at a location downstream of a combustion chamber of the internal combustion engine.

2. A method as claimed in claim 1, comprising the further steps of providing an ignition source within the exhaust for igniting said combustible gas and operating said ignition source to ignite said combustible gas in said exhaust.

3. A method as claimed in claim 1 or claim 2, wherein the combustible gas comprises reformate gas.

4. A system for increasing the temperature of exhaust gas within an exhaust (4,24) of an internal combustion engine (2,22), said system comprising a source (10,34) of combustible gas and means for injecting said combustible gas into the exhaust (4,24) at a location downstream of a combustion chamber of the internal combustion engine.

5. A system as claimed in claim 4, further comprising an ignition source (14) for igniting the combustible gas within the exhaust (4).

6. A system as claimed in claim 4 or claim 5, wherein the combustible gas comprises reformate gas.

7. A system as claimed in claim 5 or claim 6 when dependent upon claim 5, wherein said combustible gas is supplied into the exhaust (4) at a location (12) upstream of a first exhaust gas treatment device (6) provided in the exhaust (4) whilst said ignition source (14) is provided at a location either upstream or downstream of said first exhaust gas treatment device (6).

8. A system as claimed in claim 7, wherein said first exhaust gas treatment device (6) comprises an oxidation catalyst.

9. A system as claimed in claim 7 or claim 8, wherein further exhaust gas treatment devices (8), such as a particulate filter and a NOx trap, are provided in the exhaust (4) downstream of said ignition source (14).

10. A system as claimed in any of claims 4 to 6, wherein a turbocharger (26) is provided in the exhaust (24) and the combustible gas is supplied into the exhaust (24) at a location (36) upstream of the turbocharger (26).

11. A system as claimed in claim 10, wherein an ignition source, such as a spark plug, is provided upstream of the turbocharger (26) for igniting the mixture, if required.
